Europäisches Patentamt

(19) European Patent Office

Office européen des brevets

(11) Publication number: **0 270 187**
**B1**

# (12) EUROPEAN PATENT SPECIFICATION

(45) Date of publication of the patent specification:
07.11.90

(21) Application number: **87202365.0**

(22) Date of filing: **30.11.87**

(51) Int. Cl.⁵: **C09K 11/88**, C09K 11/64,
C09K 11/62, C09K 11/61,
H01J 29/32

(54) Cathode ray tube and device for projection television provided with such a tube.

(30) Priority: **01.12.86 NL 8603058**
**14.09.87 NL 8702182**

(43) Date of publication of application:
**08.06.88 Bulletin 88/23**

(45) Publication of the grant of the patent:
**07.11.90 Bulletin 90/45**

(84) Designated Contracting States:
**AT CH DE FR GB IT LI NL SE**

(56) References cited:
**EP-A- 0 091 184**
**US-A- 3 602 753**
**US-A- 3 655 575**

**JAPANESE JOURNAL OF APPLIED PHYSICS, vol. 19,
no. 2, February 1980, pages 267-277; T. HOSHINA et al.:
"Luminescence excitation spectra and their exciton
structures of ZnS phosphors. I. Mn, (Cu,Al),(Ag,Al) and
(Au,Al) doped phosphors"**

(73) Proprietor: **N.V. Philips' Gloeilampenfabrieken,
Groenewoudseweg 1, NL-5621 BA Eindhoven(NL)**

(72) Inventor: **Vermeulen, Gerardus Antonius Wilhelmus, c/o
INT. OCTROOIBUREAU B.V. Prof. Holstlaan 6,
NL-5656 AA Eindhoven(NL)**

(74) Representative: **Evers, Johannes Hubertus Marie et al,
INTERNATIONAAL OCTROOIBUREAU B.V Prof.
Holstlaan 6, NL-5656 AA Eindhoven(NL)**

ACTORUM AG

## Description

The invention relates to a cathod ray tube having a luminescent screen which is suitable for screen loads of more than 0.05 W/cm² and which comprises a blue luminescing ZnS activated by silver and co-activated by one or more of the elements Cl, Br, I, F, Al, Ga and In, in which up to 20 mol% of the Zn may be replaced by Cd and up to 20 mol% of the S may be replaced by one or more of the elements Se and Te. The invention also relates to a device for projection television provided with such a tube.

Cathode ray tubes which are used on a large scale for the display of pictures, notably colour pictures have a display screen which can be observed directly (so-called direct-vision tubes). The display screen of these tubes is provided with a luminescent layer which is excited by one or more electron beams and in which the load of the layer (the screen load) has a value of the order of 0.01 W/cm². The screen load is herein defined as the power in the electron beams per cm² of the total surface area of the luminescent layer. The power density on the part of the luminescent layer impinged upon by the beam (the spot load) is of course much higher, namely of the order of 500 W/cm². In such a colour display tube the picture is composed of the three primary colours red, green and blue. Generally three luminescent materials are therefore used. A frequently used combination comprises a red luminescing $Eu^{3+}$-activated oxide or oxysulphide or a rare earth metal, a green luminescing zinc sulphide activated by Cu and co-activated by, for example, Al and possibly comprising cadmium and a blue luminescing zinc sulphide activated by Ag and co-activated by one or more of the elements Cl, Br, I, F, Al, Ga and In. The said luminescent sulphides have been generally known for many years. ZnS occurs in two crystal modifications, namely the sphalerite structure (cubic, zincblende) and the wurtzite structure (hexagonal), see for example USP 2,947,704. It is common practice to use ZnS having the wurtzite structure as the green luminescing material. However, it is known from European Patent Specification 91,184 to use a green luminescing ZnS having the sphalerite structure and activated by Cu and Au in so-called Data Graphics Displays for reasons of the long afterglow period. Only the sphalerite phase of ZnS is used in practice for the blue luminescing material. The blue luminescing Ag-activated ZnS having the sphalerite structure has in fact a higher brightness than the Ag-activated ZnS having the wurtzite structure.

For different uses, for example in tubes which are used at very high levels of ambient illumination and also in tubes for projection television, cathode ray tubes must be available which have a luminescent screen which can be loaded to a much higher extent than in the case of the conventional direct-vision tubes. In a projection television tube a very bright picture is formed on a luminescent screen having a comparatively small surface area, and this picture, which is magnified many times, is projected on a viewing screen. In order to obtain a sufficient brightness of the projected picture, very high screen loads, namely higher than 0.05 W/cm² (higher than approximately 5 kW/cm² in the spot) of the luminescent screen of the projection tube are necessary. It has been found that the use of the above-mentioned luminescent sulphides has great drawbacks. These sulphides are notably found to degrade comparatively rapidly under the high load during the lifetime of the cathode ray tube, which results in a great decline in brightness. After an operating time of, for example 3000 hours, in which time the screen has taken up a total charge of 75 C/cm², the brightness may already have declined to less than half the initial brightness. It is therefore the object to replace the luminescent sulphides by other luminescent materials in high-load cathode ray tubes. For the green emission $Tb^{3+}$- activated luminescent materials, for example $Tb^{3+}$- activated indium borate, $Tb^{3+}$- activated yttrium aluminate garnet possibly comprising gallium or $Tb^{3+}$- activated yttrium monosilicate are available. For the blue emission, however, a suitable replacement of the Ag-activated zinc sulphide has not yet been found in practice.

The invention has for its object to provide cathode ray tubes which are suitable for high loads and are provided with a blue luminescing material which has a minimum degradation.

According to the invention a cathod ray tube for displaying pictures and having a luminescent screen suitable for high screen loads as described in the opening paragraph is characterized in that the zinc sulphide has the hexagonal crystal structure of wurtzite.

It has surprisingly been found that Ag-activated zinc sulphide having the wurtzite structure (hexagonal) has a smaller decline in brightness at high screen loads (> 0.05 W/cm²) than the Ag-activated zinc sulphide having the sphalerite structure. As is common practice, the zinc sulphide not only comprises Ag as an activator but also one or more co-activators of the Cl, Br, I, F, Al, Ga and In group. It is possible to replace up to 20 mol% of the Zn by Cd and up to 20 mol% of the S by one or more of the elements Te and Se. In the case of equal loads the brightness of the Ag-activated ZnS having the wurtzite structure has decreased only approximately 20 % after an operating time of 2000 hours (that is to say, a total charge of 50 C/cm²) in a high-load cathode ray tube as compared with a decrease of approximately 45% of Ag-activated ZnS having the sphalerite structure.

The colour point of the Ag-activated ZnS having the wurtzite structure and not comprising Cd, Se or Te (x = 0.160 and y = 0.035) is slightly shifted with respect to the Ag-activated ZnS having the sphalerite structure and not comprising Cd, Se or Te (x = 0.150 and y = 0.060). Due to this shift of the colour point the colour range is also slightly shifted. The brightness of a tube in which only this ZnS is provided in the luminescent layer is slightly lower in a tube according to the invention (wurtzite) as compared with a tube in which the Ag-activated ZnS having the sphalerite structure is provided. However, by small replacements (up to 20 mol%) of Zn by Cd and/or small replacements (up to 20 mol%) of S by one or more of the elements Se and Te, the colour point of the Ag-activated ZnS having the wurtzite structure may be shifted, for example shifted back, to the colour point of pure Ag-activated ZnS having the sphalerite structure. In colour television it is also possible to readjust the blue colour point without using Cd, Se and/or Te by contributions of the other colours red and green.

An embodiment of a cathode ray tube according to the invention is characterized in that the luminescent screen also comprises at least one green luminescing $Tb^{3+}$-activated material and in that it comprises a red luminescing $Eu^{3+}$-activated material.

A practical embodiment of a cathode ray tube according to the invention is characterized in that the green luminescing $Tb^{3+}$-activated material is chosen from the group of the indium borates, the yttrium aluminate and/or gallate garnets, the yttrium monosilicates and the rare earth metal oxyhalogenides and in that the red luminescing material is $Eu^{3+}$-activated yttrium oxide. A rare earth metal oxyhalogenide is, for example LaOBr or LaOCl.

The invention also relates to a device for projection television provided with a cathode ray tube according to the invention.

A very advantageous embodiment of such a device suitable for projection television is characterized in that the device is also provided with a cathode ray tube having a luminescent screen comprising at least one green luminescing $Tb^{3+}$-activated material and is provided with a cathode ray tube having a luminescent screen comprising a red luminescing $Eu^{3+}$-activated material.

A very practical embodiment of such a device suitable for projection television is characterized in that the device is provided with a cathode ray tube having a luminescent screen comprising at least one green luminescing $Tb^{3+}$-activated material chosen from the group of the indium borates, the yttrium aluminate and/or gallate garnets, the yttrium monosilicates and the rare earth metal oxyhalogenides, and is provided with a cathode ray tube having a luminescent screen comprising at least red luminescing $Eu^{3+}$-activated yttrium oxide.

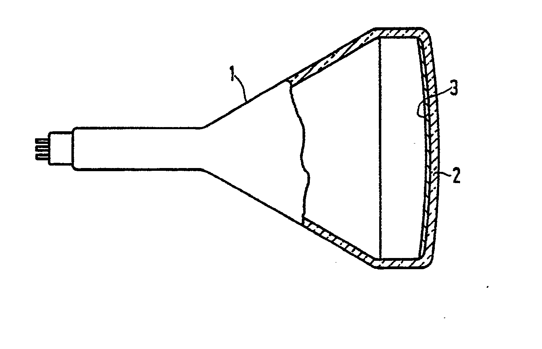

An embodiment of a cathode ray tube according to the invention will now be described with reference to the accompanying drawing and a number of measurements.

The drawing is a partial diagrammatic cross-section of a cathode ray tube for displaying pictures and being suitable for high screen loads ( > 0.05 $W/cm^2$). The tube comprises an evacuated envelope 1 having a display screen 2 on which a luminescent screen 3 is provided. The screen 3 is provided with a luminescent Ag-activated ZnS having a wurtzite structure according to the invention.

The luminescent ZnS having the wurtzite structure can be obtained by solid state reactions at a high temperature. The ZnS fundamental material is then mixed with a silver compound and co-activator compounds and also, if desired, with one or more of the compounds CdS, ZnSe and ZnTe. The concentrations of the Ag activator and of the co-activators are chosen in the conventional ranges, namely from 25 to 1000 ppm for Ag and from 75 to 3000 ppm for the co-activators per mol of the sulphide.

In order to enhance the crystal growth and to control the grain size, a flux is added in known manner. Furthermore an extra quantity of S is generally used. Dependent on the fundamental materials used, it is necessary to carry out a firing treatment in air for some time (for example, 0.5 to 2 hours) at a temperature at which the high-temperature phase (wurtzite) is formed ( > 950°C).

After cooling, superfluous S and the flux residues are removed by washing in water. The structure of the Ag- activated ZnS obtained can be checked by means of X-ray diffraction analyses.

The Table below indicates the percentages of decline in brightness of ZnS-Ag having the wurtzite structure according to the invention after 1000, 2000 and 3000 hours of load in a cathode ray tube (total charge 25, 50 and 75 $C/cm^2$, respectively). For the purpose of comparison the Table also states measurements of ZnS-Ag having the sphalerite structure, $InBO_3$-Tb and $Y_2O_3$-Eu. The screen load of the luminescent layer of the cathode ray tube was 0.12 $W/cm^2$.

| Phosphor | Decline in brightness (%) after | | |
| --- | --- | --- | --- |
| | 1000 hrs | 2000 hrs | 3000 hrs |
| ZnS-Ag sphalerite | 24 | 43 | 53 |
| ZnS-Ag wurtzite | 11.7 | 18.3 | 25.2 |
| $InBO_3$-Tb | 12.1 | 17.3 | 18.6 |
| $Y_2O_3$-Eu | 7.8 | 12.1 | 21.0 |

Claims

1. A cathode ray tube having a luminescent screen which is suitable for screen loads of more than 0.05 $W/cm^2$ and which comprises a blue luminescing ZnS activated by silver and co-activated by one or

3

more of the elements Cl, Br, I, F, Al, Ga and In, in which up to 20 mol% of the Zn may be replaced by Cd and up to 20 mol% of the S may be replaced by one or more of the elements Se and Te, characterized in that the zinc sulphide has a hexagonal crystal structure of wurtzite.

2. A cathode ray tube as claimed in Claim 1, characterized in that the luminescent screen also comprises at least one green luminescing $Tb^{3+}$-activated material and in that it comprises a red luminescing $Eu^{3+}$-activated material.

3. A cathode ray tube as claimed in Claim 2, characterized in that the green luminescing $Tb^{3+}$-activated material is chosen from the group of the indium borates, the yttrium aluminate and/or gallate garnets, the yttrium monosilicates and the rare earth metal oxyhalogenides and in that the red luminescing material is $Eu^{3+}$-activated yttrium oxide.

4. A device for projection television provided with a cathode ray tube as claimed in Claim 1.

5. A device as claimed in Claim 4, characterized in that the device is also provided with a cathode ray tube having a luminescent screen comprising at least one green luminescing $Tb^{3+}$-activated material and is provided with a cathode ray tube having a luminescent screen comprising at least a red luminescing $Eu^{3+}$-activated material.

6. A device as claimed in Claim 5, characterized in that the device is provided with a cathode ray tube having a luminescent screen comprising at least one green luminescing $Tb^{3+}$-activated material chosen from the group of the indium borates, the yttrium aluminate and/or gallate garnets, the yttrium monosilicates and the rare earth metal oxyhalogenides and is provided with a cathode ray tube having a luminescent screen comprising at least red luminescing $Eu^{3+}$-activated yttrium oxide.

**Patentansprüche**

1. Kathodenstrahlröhre mit einem Leuchtschirm, der sich für Schirmbelastungen über 0,05 W/cm² eignet, und der ein blauleuchtendes silberaktiviertes ZnS enthält, das durch eines oder mehrere der Elemente Cl, Br, I, F, Al, Ga und In koaktiviert wird, worin gegebenenfalls bis zu 20 Mol% von Zn durch Cd und bis zu 20 Mol.% von S durch eines oder mehrere der Elemente Se und Te ersetzt sind, dadurch gekennzeichnet, daß das Zinksulfid die hexagonale Kristallstruktur von Wurtzit besitzt.

2. Kathodenstrahlrohre nach Anspruch 1, dadurch gekennzeichnet, daß der Leuchtschirm ausserdem wenigstens einen grünen $Tb^{3+}$-aktivierten Leuchtstoff und einen roten $Eu^{3+}$-aktivierten Leuchtstoff enthält.

3. Kathodenstrahlröhre nach Anspruch 2, dadurch gekennzeichnet, daß der grüne $Tb^{3+}$-aktivierte Leuchtstoff aus der Gruppe der Indiumborate, der Yttriumaluminat- und/oder -gallatgranate, der Yttriummonosilikate und der Seltenerdmetalloxyhalogenide gewählt wird, und daß der rote Leuchtstoff $Eu^{3+}$-aktiviertes Yttriumoxid ist.

4. Gerät für Projektionsfernsehen mit einer Kathodenstrahlröhre nach Anspruch 1.

5. Gerät nach Anspruch 4, dadurch gekennzeichnet, daß das Gerät ausserdem eine Kathodenstrahlröhre mit einem Leuchtschirm mit wenigstens einem grünen $Tb^{3+}$-aktivierten Leuchtstoff und eine Rathodenstrahlröhre mit einem Leuchtschirm mit wenigstens einem roten $Eu^{3+}$-aktivierten Leuchtstoff enthält.

6. Gerät nach Anspruch 5, dadurch gekennzeichnet, daß es eine Kathodenstahlröhre mit einem Leuchtschirm mit wenigstens einem grünen $Tb^{3+}$-aktivierten Leuchtstoff aus der Gruppe der Indiumborate, der Yttriumaluminat- und/oder -gallatgranate, der Yttriummonosilikate und der Seltenerdmetalloxyhalogenide, und eine Kathodenstrahlröhre mit einem Leuchtschirm mit wenigstens einem rotleuchtenden $Eu^{3+}$-aktivierten Yttriumoxid enthält.

**Revendications**

1. Tube à rayons cathodiques muni d'un écran luminescent qui est approprié aux charges d'écran supérieures à 0,05 W/cm² et qui contient un ZnS émettant une luminescence bleue qui est activée à l'aide d'argent et coactivée à l'aide d'un ou de plusieurs des éléments Cl, Br, I, F, Al, Ga et In, dans lesquels jusqu'à 20% en moles du Zn peut être remplacé par Cd et jusqu'à 20% en moles du S peut être remplacé par un ou plusieurs des éléments Se et Te, caractérisé en ce que le sulfure de zinc présente la structure cristalline hexagonale de wurtzite.

2. Tube à rayons cathodiques selon la revendication 1, caractérisé en ce que l' écran luminescent contient également au moins un matériau activé à l'aide de $Tb^{3+}$ émettant une luminescence verte et en ce qu'il contient un matériau activé à l'aide de $Eu^{3+}$ émettant une luminescence rouge.

3. Tube à rayons cathodiques selon la revendication 2, caractérisé en ce que le matériau activé à l'aide de $Tb^{3+}$ émettant une luminescence verte est choisi dans le groupe constitué par les borates d'indium, les grenats – aluminate et/ou gallate d'yttrium, les monosilicates d'yttrium et les halogénures de métaux des terres rares et en ce que le matériau émettant une luminescente rouge est de l'oxyde d'yttrium activé à l'aide d'$Eu^{3+}$.

4. Dispositif pour la télévision par projection muni d'un tube à rayons cathodiques selon la revendication 1.

5. Dispositif selon la revendication 4, caractérisé en ce que le dispositif est également muni d'un tube à rayons cathodiques présentant un écran luminescent contenant au moins un matériau activé à l'aide de

$Tb^{3+}$ émettant une luminescence verte et d'un tube à rayons cathodiques présentant un écran luminescent contenant au moins un matériau activé à l'aide d'$Eu^{3+}$ et émettant une luminescence rouge.

6. Dispositif selon la revendication 5, caractérisé en ce que le dispositif est muni d'un tube à rayons cathodiques présentant un écran luminescent contenant au moins un matériau activé à l'aide de $Tb^{3+}$ émettant une luminescence verte choisi dans le groupe constitué par les borates d'indium, les grenats – aluminate et/ou gallate d'yttrium, les monosilicates d'yttrium et les halogénures de métaux des terres rares et est muni d'un tube à rayons cathodiques présentant un écran luminescent contenant au moins un oxyde d'yttrium activé à l'aide d'$Eu^{3+}$ émettant une luminescence rouge.